Europäisches Patentamt

European Patent Office

Office européen des brevets

(11) Publication number: **0 159 831**
A2

(12) **EUROPEAN PATENT APPLICATION**

(21) Application number: **85302215.0**

(22) Date of filing: **29.03.85**

(51) Int. Cl.⁴: **G 01 L 1/10**

(30) Priority: **31.03.84 JP 63996/84**

(43) Date of publication of application: **30.10.85**
**Bulletin 85/44**

(84) Designated Contracting States: **CH DE GB LI**

(71) Applicant: **SHIMADZU CORPORATION, 378, Ichinofunairi-cho Kawaramachi-dori Nijo Sagaru, Nakagyo-ku Kyoto 604 (JP)**

(72) Inventor: **Komoto, Akira, 3-10 Fujio-Okumachi, Otsu-shi Shiga 520 (JP)**
Inventor: **Ishida, Shohei, 58 Ishida-cho, Moriyama-shi Shiga 524 (JP)**

(74) Representative: **Smith, Philip Antony et al, REDDIE & GROSE 16 Theobalds Road, London WC1X 8PL (GB)**

(54) **Vibration type force detector.**

(57) In a vibration type force detector devised so as to detect the magnitude of a force by measuring the vibration frequency of a vibration element vibrating in a magnetic field with the force loaded, the exciter employed for exciting the vibration element to make the same continue non-decaying vibration with an exciting current fed back from the voltage developed on the vibration element is improved so as to output an exciting current proportional only to the electromagnetic force generated by the vibration of the vibration element without being affected by the voltage drop made by the exciting current on the vibration element. The voltage drop component in the voltage developed on the vibration element is cancelled with an offset voltage prepared by dividing the output voltage of the exciter. Thus the exciter can amplify only the e.m.f component, if the offset voltage is adjusted to be equal to the voltage drop on the vibration element. Therefore, the vibration element can be excited effectively irrespective of its resistance and/or mechanical Q-value.

# VIBRATION TYPE FORCE DETECTOR

## Background of the Invention

1. Field of the Invention

The present invention relates to a vibration type force detector devised so as to drive the magnitude of a force from the proper vibration frequency of a vibration element vibrating with the force loaded.

2. Prior Art

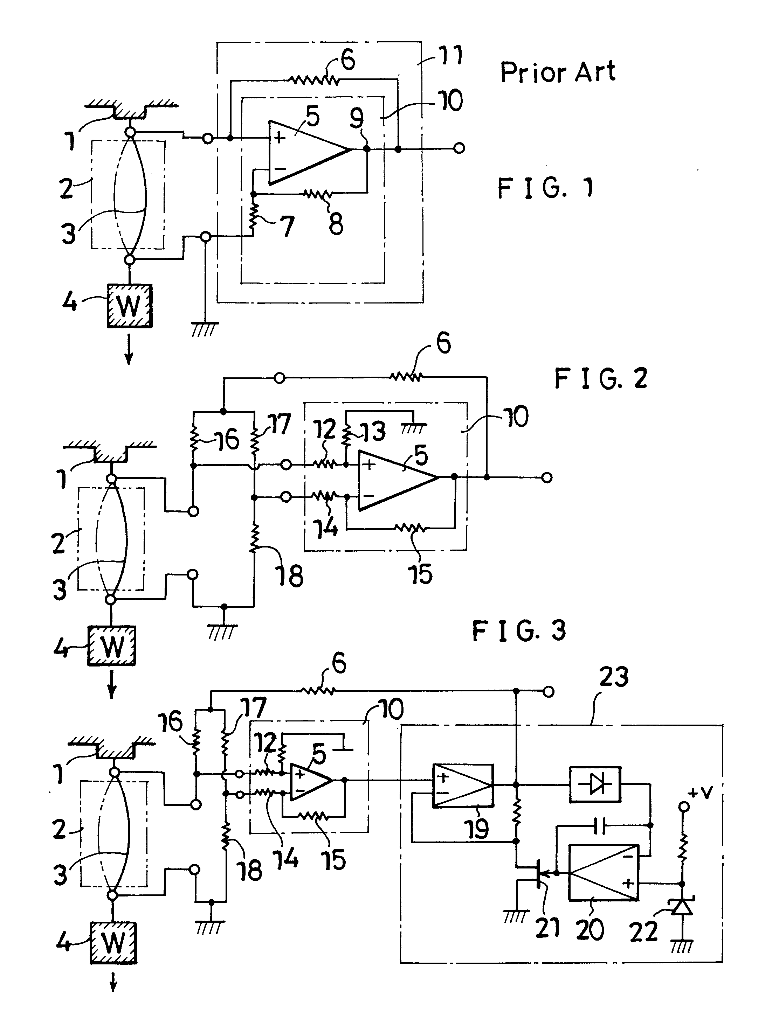

As is well known, any solid body can be made to vibrate at a proper vibration frequency, which is related to a force loaded on the body. For example, a linear solid body stretched with a tension loaded can vibrate perpendicularly to the direction of the tension at a proper vibration frequency proportional to the square-root of the tension. The phenomenon has widely been used in many kinds of vibration type force detectors such as weighing scale, acceleration detectors and the like. The vibration elements used in such force detectors are usually constituted with a quartz plate or bar, a vibration string or a tuning fork. In any case, the force detector is devised so as to make the vibration element continue non-decaying stable vibrations by continuously exciting the element with a suitable excitation means, which supplys the vibration element with energy compensating the loss in the vibration energy. In case of using a string or a tuning fork as a vibration element, the excitation of vibration is usually by means of (1) a piezo-electric element sticked on the vibration element, (2) an electromagnetic coil arranged so as to have a magnetic connection with the vibration element, or (3) supplying an exciting current directly to the vibration element with the same kept in a static magnetic field. However, the means of (1) has an important disadvantage that an adhesive material for sticking the piezo-electric element may affect the vibration to make it unstable, while the means of (2) restricts the material of the vibration element to a ferromagnetic substance. In case of using the means of (3), the vibration element (made of an electrically conductive material) is supplied with a vibration exciting current in synchronism with the voltage produced by the vibration element vibrating in the magnetic field. This method has only a restriction that the vibration element must be electrically conductive, and is thus free from such disadvantages as those involved in the preceeding means of (1) and (2). However, this method also has a problem, as described in the following, in case the (electric) resistance of the vibration element is large or the mechanical Q-value of the vibration element is low. The operation of a prior art type force detector employing the above means of (3) is described according to Fig. 1.

In Fig. 1 a vibration string made of a metal is vibrating with its upper end fixed to a base 1 and with its lower end loaded with a weight 4, which gives the string 3 a tension proportional to the weight 4. An enclosure 2 shown with a double-dotted line is the area where a static magnetic field is applied. An operational amplifier 5 and resistors 7, 8 constitute a positive-gain amplifier 10 with a gain of $(1 + R_8/R_7)$, where $R_7$ and $R_8$ are the values of the resistors 7 and 8, respectively. A resistor 6 connecting between the output point 9 and non-inverting input terminal of the operational amplifier 5 is a feed-back resistor through which an exciting current is supplied to the vibration element from the output point 9. The (feed back) resistor 6 and the amplifier 10 constitute a vibration element exciting circuit 11 for exciting the vibration string 3 to make the same continue non-decaying stable vibrations. In other words the circuit 11 constitutes an oscillator together with the vibration string 3. In this case the input voltage to the vibration element exciting circuit 11 is, as is easily understood from a simple analysis,

- 3 -

the difference between the electromotive force due to the string vibration and the potential drop given by the product of the exciting current and the resistance of the vibration string 3. Therefore, if the resistance of the vibration string 3 is small or if the excitation current required is small because of a high mechanical Q-value of the string 3, there is no problem in keeping the entire circuit (including the vibration string 3) under an oscillating condition. However, in cases the vibration string 3 can not help being made electrically low-conductive and the mechanical Q-value of the vibration string 3 is very small, it becomes difficult to make the circuit oscillate stably. Although a method of making a vibration string of a low Q-value continue to vibrate is, for instance, proposed in Japanese Laid-Open Patent Application 52-69677, the method needs a complicated circuit constitution, and it seems difficult to expect an excellent performance on this method.

Objects and Summary of the Invention

An object of the present invention is to provide a vibration type force detector devised so as to make a vibration element continue to vibrate stably even if it has an electrically high resistance and a low mechanical Q-value.

Another object of the present invention is to constitute such a force detector in a simple circuit construction.

According to the present invention, the vibration element exciting circuit has its amplifier made in the form of a differential amplifier, and further comprises a voltage divider to obtain an "offset" voltage by dividing the output voltage from the amplifier. The offset voltage is preferably adjusted to be just equal to a voltage drop on the vibrating element due to the exciting current. This off-set voltage is inputted to the inverting input terminal of the differential amplifier, while the voltage developed on the vibrating element is inputted to the non-inverting terminal of the same differential amplifier. Therefore, the voltage drop component contained in the entire voltage developed on the vibration element is cancelled out by the offset voltage on the input side of the amplifier, and the vibration element exciting circuit is thus made to supply the vibration element with an exciting current proportional only to the electromotive force generated by the vibration of the vibration element.

Accordingly; the present invention provides a vibration type force detector in which the vibration element employed can be kept vibrating stably irrespective of its electric resistance and mechanical Q-value.

Brief Description of the Drawings

A better understanding of the present invention may be had from the detailed description when read in connection with the accompanying drawings, in which:

Fig. 1 shows a fundamental circuit constitution of a vibration type force detector according to a prior art;

Fig. 2 shows a circuit constitution of a fundamental embodiment of the present invention;

Fig. 3 shows a second embodiment in which the above embodiment is modified;

Figs. 4 and 5 show possible alternatives of the voltage divider circuit employed in the present invention; and

Figs. 6, 7 and 8 illustrate how to make the vibration element vibrate at higher vibration modes.

Detailed Description of the Invention

Referring to Fig. 2, which shows a circuit constitution of a fundamental embodiment of the present invention, a vibration string 3 loaded with a weight 4
vibrates in a magnetic field whose application area 2
is shown by a double-dotted line. A voltage developed
on the vibration string 3 (made of an electrically
conductive material) is inputted to the non-inverting
input terminal of an IC operational amplifier 5, which
constitutes a differential amplifier circuit 10 together
with resistors 12, 13, 14 and 15. The output from the
amplifier 10 (or the IC operational amplifier 5) is fed
back as exciting current to the vibration element 3
through a feed-back resister 6 and a resister 16, and
supplied, in the same time, to a series connection of
resisters 17 and 18, which constitute a voltage divider
to obtain an "offset" voltage on the resister 18. The
offset voltage is inputted to the inverting input
terminal of the differential amplifier 10. The resultant voltage developed on the vibration string 3 is the
algebraic sum of an electromotive force generated by
the string vibration and a voltage drop appearing on
the vibration element 3 due to the exciting current fed
back from the differential amplifier 10. Therefore,
if the offset voltage is adjusted to be just equal to
the value of the voltage drop component contained in
the voltage developed on the vibration element 3, the
differential amplifier outputs a voltage proportional

- 7 -

only to the voltage generated by the vibration of the vibration string 3. The adjustment of the offset voltage outputted from the resister 18 can be executed by suitably choosing the resistance ratio of the resistor 18 to the vibration element, with the resistances of the resistors 16, 17, 18 and 6 kept constant. (In principle the offset voltage is determined by all of these resistors.) Therefore, the vibration string 3 is always supplied with an exciting current proportional only to a voltage generated by the string vibration, irrespective of the resistance of the vibration element 3 and the magnitude of exciting current determined from a mechanical Q-value of the vibration string 3.

Fig. 3 shows a second embodiment of the present invention. This embodiment is provided with an AGC (automatic gain control) circuit 23 for controlling the vibration amplitude of the vibration string 3 at a constant value. In this embodiment, the output from the differential amplifier 10 is not fed back therefrom to the input side, but inputted to the non-inverting input terminal of a differential amplifier 19 contained in the AGC circuit 23. The output from the amplifier 19 is rectified to a D.C voltage and then inputted to the inverting input terminal of another differential amplifier 20, whose non-inverting input terminal is supplied with a constant D.C voltage from a Zener diode
22. The output from the amplifier controls the gate of
a FET 21 whose drain terminal is connected to the inverting terminal of the differential amplifier 19 directly
and to the output side of the same through a resistor.
The exciting current to the vibration string 3 through
the feed-back resistor 6 is supplied from the output
side of the differential amplifier 19. An increase (or
a decrease) in the vibration amplitude of the string 3
thus causes the output from the differential amplifier
19 to decrease (or increase) to return the vibration
amplitude to an original value.

In both of the above embodiments, the resistor 18
is preferably constituted with a variable resistor so
that the offset voltage may be exactly adjusted for a
possible small change in the mechanical Q-value of the
vibration string 3.

Further, the resistors 17 and 18 constituting the
voltage divider for obtaining the offset voltage can
of course be replaced with capacitors as shown in Fig.
4, or with reactors as shown in Fig. 5.

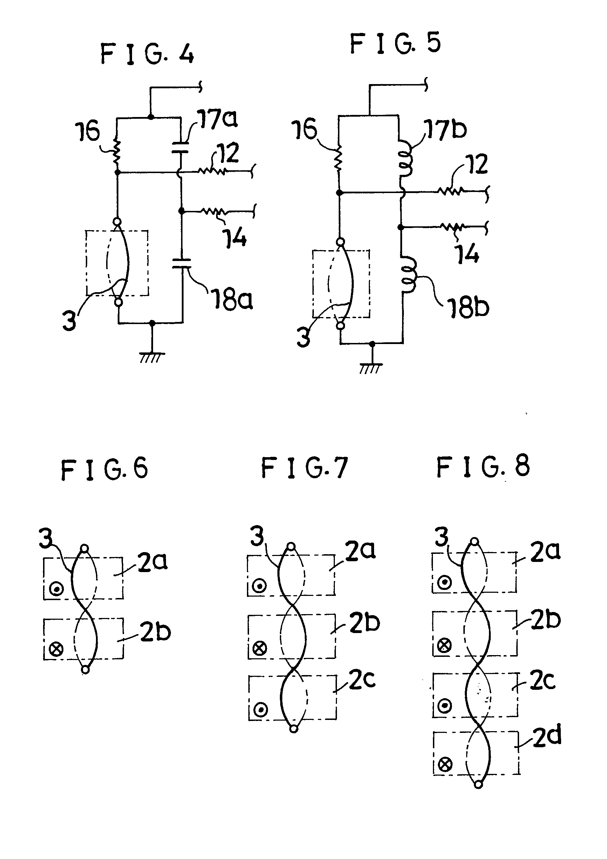

Figs. 6, 7 and 8 schematically illustrate methods
of making the vibration string 3 vibrate at vibration
modes higher than the fundamental mode. In the figures,
enclosures 2a, 2b, 2c and 2d define the areas of magnetic fields applied in the directions opposite to one another. Higher mode vibrations decrease the dissipation of vibration energy to the ambient system and result in an increase in the performance of the apparatus.

0159831

CLAIMS:

1. A vibration type force detector devised so as to obtain the magnitude of a force by measuring the vibration frequency of a vibration element vibrating with the force loaded, said vibration type force detector comprising:

a vibration element for vibrating in a magnetic field with a force to be detected being loaded, said vibration element being made of an electrically conductive material;

an exciting means for supplying an exciting current to said vibration element to make the same continue vibration;

an offset voltage generating means for generating an offset voltage by dividing the voltage outputted from said exciting means, said offset voltage being equal to the product of said exciting current and the resistance of said vibration element;

a first input means for inputting the voltage developed on said vibration element;

a second input means for inputting said offset voltage to said exciting means; and

a subtracting means for subtracting said offset voltage from the voltage developed on said vibration

- 11 -

element, to make said exciting current proportional only to a voltage generated by the vibration of said vibration element.

2.    A vibration type force detector defined in Claim 1, wherein said offset voltage generating means uses resistors in dividing the voltage outputted from said exciting means.

3.    A vibration type force detector defined in Claim 1, wherein said offset voltage generating means uses capacitors in dividing the voltage outputted from said exciting means.

4.    A vibration type force detector defined in Claim 1, wherein said offset voltage generating means uses reactors in dividing the voltage outputted from said exciting means.

5.    A vibration type force detector defined in Claim 1, 2, 3 or 4, wherein both said exciting means and said subtracting means are combined with each other to form a differential amplifier.

0159831

1/2

Prior Art

FIG. 1

FIG. 2

FIG. 3

FIG. 4

16 17a
12
14
3 18a

FIG. 5

16 17b
12
14
3 18b

FIG. 6

3
2a
2b

FIG. 7

3
2a
2b
2c

FIG. 8

3
2a
2b
2c
2d